Europäisches Patentamt

European Patent Office

Office européen des brevets

(19)

(11) Numéro de publication : **0 062 566**
**B1**

(12) FASCICULE DE BREVET EUROPÉEN

(45) Date de publication du fascicule du brevet :
05.06.85

(51) Int. Cl.⁴ : **B 62 B  3/10**

(21) Numéro de dépôt : 82400537.5

(22) Date de dépôt : 24.03.82

(54) Chariot multi-fonctions repliable.

(30) Priorité : 27.03.81 FR 8106245

(43) Date de publication de la demande :
13.10.82 Bulletin 82/41

(45) Mention de la délivrance du brevet :
05.06.85 Bulletin 85/23

(84) Etats contractants désignés :
AT BE CH DE FR GB IT LI LU NL SE

(56) Documents cités :
FR-A- 2 292 617
GB-A- 1 322 403
US-A- 1 746 134
US-A- 3 992 038

(73) Titulaire : Balabanova, Tzvetanka
15 rue du Parc Montsouris
F-75014 Paris (FR)

(72) Inventeur : Balabanova, Tzvetanka
15 rue du Parc Montsouris
F-75014 Paris (FR)

(74) Mandataire : Chauchard, Robert et al
c/o Cabinet Malémont 42, avenue du Président
Wilson
F-75116 Paris (FR)

Jouve, 18, rue St-Denis, 75001 Paris, France

## Description

La présente invention se rapporte à un chariot multi-fonctions repliable, utilisé notamment pour l'exécution des tâches de nettoyage et d'entretien dans un hôpital, ou tout autre bâtiment public ou privé de grande surface, ce chariot comprenant de façon connue, des roulettes sur lesquelles sont montées une partie rigide et une armature repliable pouvant être placée dans une position dépliée d'utilisation ou une position repliée de repos.

Les travaux d'entretien et de nettoyage dans les bâtiments de grande surface se décomposent souvent en une succession de tâches nécessitant chacune leurs propres ustensiles et accessoires. Dans les hôpitaux et les restaurants de collectivité par exemple, ces travaux consistent à balayer le sol puis à le nettoyer à l'eau, à épousseter les meubles, à vider les poubelles, etc... Pour exécuter ces diverses tâches, la femme de ménage préposée au nettoyage doit pouvoir disposer en permanence auprès d'elle d'ustensiles et d'accessoires hétéroclites quelquefois lourds et encombrants, tels que balais, serpillères, seaux d'eau, bacs, essoreuse manuelle, sac poubelle, flacons de produits d'entretien divers et autres. A cette fin, la femme de ménage s'accompagne d'un chariot sur lequel peuvent être regroupés tous ces objets.

Afin de leur conférer une capacité maximale, on a donné aux chariots connus, utilisés à cette fin, une structure relativement volumineuse, ce qui les rend lourds, et donc peu maniables. Ces chariots sont en outre encombrants et, étant donné qu'ils sont utilisés en grand nombre, voire par plusieurs dizaines, dans un même hôpital ou restaurant, il est en outre nécessaire de prévoir, pour leur rangement, un local de grande surface ; or, ceci est particulièrement désavantageux notamment en raison du coût relativement élevé du mètre carré dans les hôpitaux.

Ce dernier problème a été partiellement résolu par la mise sur le marché de chariots repliables ou escamotables. Toutefois, pour pouvoir conférer à ces chariots une structure repliable, on a dû réduire leur capacité. Par ailleurs, leur repliage est assez malaisé et n'est pas suffisamment satisfaisant en vue du rangement de ces chariots dans un espace le plus réduit possible.

La présente invention se propose de remédier aux inconvénients ci-dessus et, pour ce faire, elle a pour objet un chariot multi-fonctions repliable du type précité, qui se caractérise en ce que la partie rigide est constituée par un châssis reposant à plat sur les roulettes, et en ce que l'armature comprend au moins deux bras articulés sur le châssis, un cadre en forme de U étant monté pivotant entre ces deux bras de manière à constituer une béquille destinée à venir s'appuyer contre une butée solidaire du châssis pour immobiliser l'armature en position dépliée, les deux bras pouvant éventuellement porter entre eux un ou plusieurs éléments de support pour des objets ou des ustensiles à transporter.

Tout en étant d'une structure très aérée qui le rend relativement léger et donc facilement maniable, le chariot selon l'invention peut porter, sur son châssis et éventuellement sur les éléments de support aptes à être montés entre ses deux bras, un grand nombre d'ustensiles, d'accessoires ou autres objets. A cet effet, les éléments de support peuvent être constitués par des paniers ou plateaux amovibles ou encore par des plateaux articulés entre les deux bras et repliables dans le plan de ces derniers.

Un autre avantage de ce chariot réside dans le fait qu'on peut facilement le replier en couchant simplement ses bras sur le châssis, après avoir éventuellement retiré les paniers ou plateaux amovibles ou rabattu les plateaux articulés dans le plan des bras. Un avantage supplémentaire particulièrement intéressant réside dans le fait que, dans cette position repliée, le chariot est d'un encombrement très réduit qui correspond sensiblement à l'épaisseur de son châssis. Il en résulte un gain de place considérable lors du rangement de plusieurs chariots de ce type dans un même local.

Avantageusement, les bras du chariot sont sensiblement parallèles et se terminent à leurs extrémités libres par des poignées recourbées qui permettent de diriger manuellement le chariot.

Selon une caractéristique importante de l'invention, l'armature du chariot est articulée sur la partie frontale du châssis et comprend un élément de support pour une essoreuse manuelle amovible, constitué de deux tubes parallèles reliés à leurs extrémités par deux plaquettes de montage, cet élément de support étant fixé entre les deux bras, au niveau de l'articulation du cadre en U, en étant positionné de telle manière que les deux tubes s'étendent l'un au-dessus de l'autre dans un plan perpendiculaire à celui du châssis lorsque l'armature est dans sa position dépliée, le tube supérieur étant en outre aplati dans ledit plan contenant les deux tubes.

Grâce à ces dispositions, le chariot selon l'invention constitue un support d'essoreuse manuelle qui est non seulement mobile et repliable, mais aussi apte à résister aux contraintes élevées qui lui sont imposées lors de la manipulation de l'essoreuse.

Selon une autre caractéristique importante de l'invention, l'armature comprend en tant qu'éléments de support un ou plusieurs cadres rectangulaires portant chacun un plateau de support et montés à pivotement entre les deux bras, ce ou ces cadre(s) rectangulaire(s) et le cadre en U étant reliés en succession par des liaisons articulées.

De par cette structure particulière, l'armature du chariot peut être repliée très rapidement sur le châssis en un nombre réduit d'opérations. Pour ce faire, on exerce une simple traction vers le haut sur les deux bras, ce qui dégage instantanément la béquille de sa butée, puis on fait pivoter le cadre le plus proche des extrémités libres des bras, ce qui amène automatiquement, grâce aux liaisons articulées, les autres cadres y compris la béquille dans le plan des bras, l'armature ainsi repliée étant ensuite couchée sur le châssis.

Dans un mode de réalisation préféré, l'armature comprend un seul cadre rectangulaire et la liaison articulée est constituée d'au moins trois éléments formant bielles, articulés bout à bout, et est montée entre la branche d'appui du cadre en U et celle des branches du cadre rectangulaire qui est parallèle à l'axe d'articulation de celui-ci et est située de l'autre côté du plan des bras par rapport à la branche d'appui du cadre en U.

De préférence, une tringle de support est fixée entre les deux bras pour servir d'appui au cadre rectangulaire lorsque l'armature est dans sa position dépliée. Grâce à cette disposition, le cadre rectangulaire est rigidifié et stabilisé dans sa position dépliée d'utilisation.

Avantageusement, le cadre rectangulaire est prolongé, sur sa branche opposée à celle reliée à la liaison articulée, par un support sensiblement en forme de demi-cercle, qui comporte sur sa périphérie des éléments de fixation pour un sac souple tel qu'un sac poubelle.

En outre, le cadre rectangulaire porte, sur sa branche reliée à la liaison articulée, un organe de retenue en forme de C, dans lequel on peut placer les manches de balais reposant par leur brosse sur le châssis.

Dans une forme préférée de réalisation, le châssis comprend une plate-forme suspendue à une ossature en forme de cadre portant les roulettes, cette ossature étant constituée de deux branches longitudinales sur lesquelles les bras s'articulent intérieurement à l'ossature, et de deux branches transversales dont une comporte des étriers pour recevoir les bras dans leur position repliée. Le châssis constitue ainsi par lui-même un support creux pour des accessoires tels que des seaux d'eau et, grâce à la présence des étriers, l'armature peut s'emboîter en position repliée dans le châssis sans présenter de parties saillant latéralement qui pourraient constituer un danger lors de la manipulation du chariot replié.

Avantageusement, le chariot selon l'invention comprend des moyens de verrouillage pour immobiliser l'armature en position repliée par rapport au châssis.

Un mode de réalisation de la présente invention va être décrit ci-après à titre d'exemple non limitatif, en référence aux dessins annexés dans lesquels :

La figure 1 est une vue en perspective du chariot selon l'invention dans sa position dépliée d'utilisation.

La figure 2 est une vue du chariot de la figure 1 équipé de ses accessoires de nettoyage et d'entretien.

La figure 3 est une vue de côté à plus grande échelle du chariot de la figure 1.

La figure 4 est une vue de dessus du plateau de support rectangulaire du chariot.

Les figures 5 et 6 sont respectivement des vues de dessus et de côté du chariot selon l'invention dans sa position replié de repos.

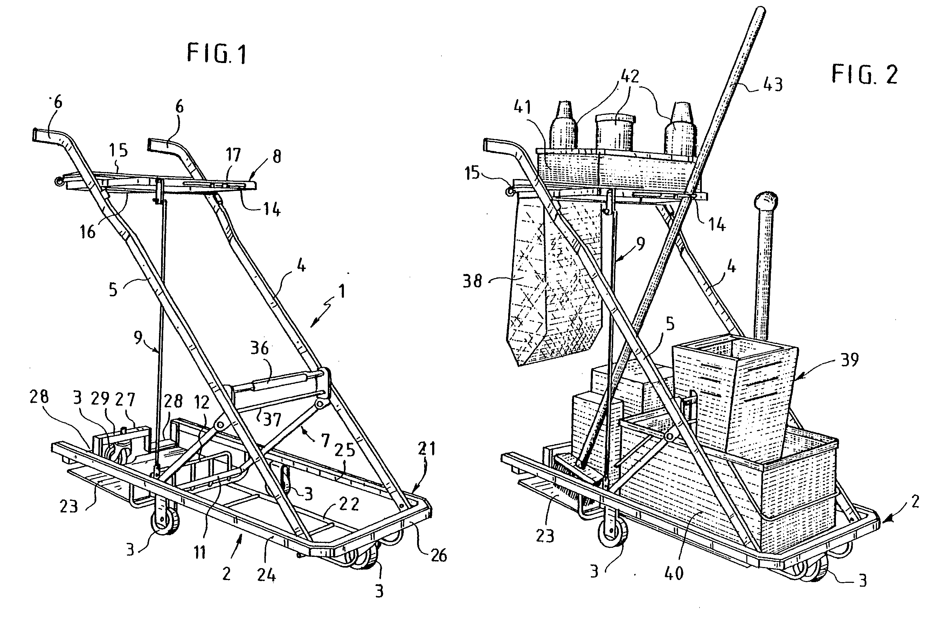

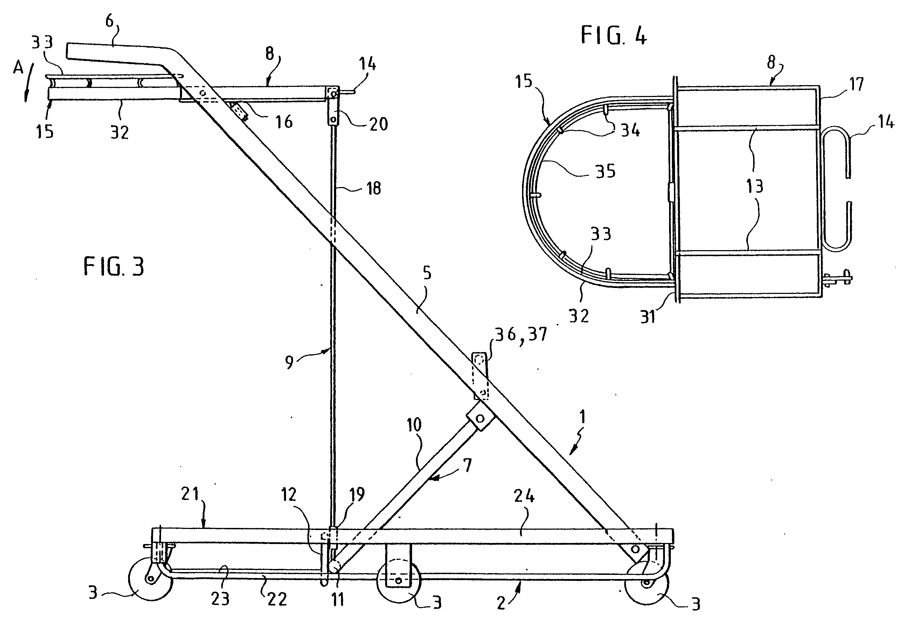

Le chariot multi-fonctions repliable, que l'on peut voir dans sa position dépliée sur les figures 1 et 3, se compose essentiellement d'une armature repliable montée sur un châssis rigide 2 qui repose à plat sur des roulettes 3.

De manière plus précise, l'armature 1 est constituée de deux bras sensiblement parallèles 4 et 5 qui sont articulés par une de leurs extrémités, sur la partie frontale du châssis 2. A leurs extrémités libres, les deux bras 4 et 5 se terminent par des poignées recourbées 6 qui permettent de diriger le chariot manuellement.

Comme on peut le voir sur les figures 1 et 3, un cadre en forme de U 7 est articulé par les extrémités libres de ses branches latérales 10 entre les bras 4 et 5 de l'armature et, plus précisément, à la partie inférieure de ceux-ci.

Ce cadre 7 constitue une béquille qui immobilise l'armature 1 dans sa position dépliée, en venant s'appuyer, par l'intermédiaire de sa branche centrale 11, contre une butée 12 solidaire du châssis 2.

Par ailleurs, un cadre rectangulaire 8 est monté à pivotement autour de l'un de ses axes de symétrie médians, entre les deux bras 4 et 5 et plus précisément à proximité des poignées 6 de ceux-ci, ce cadre rectangulaire 8 étant relié au cadre en U 7 par une liaison articulée 9. Comme on peut le voir plus nettement sur la figure 4, le cadre rectangulaire 8 comporte des traverses centrales 13 qui lui confèrent une structure de plateau-support et est en outre équipé d'éléments de fixation et de retenue 14 et 15 pour accessoires divers, dont la structure et la fonction seront décrites plus loin. Dans sa position dépliée, le cadre rectangulaire 8 repose sur une tringle de support 16 fixée entre les deux bras 4 et 5.

La liaison articulée 9, dont il a été question plus haut, est montée entre la branche centrale d'appui 11 du cadre en U 7 et la branche 17 du cadre rectangulaire 8 qui est parallèle à l'axe d'articulation de celui-ci et située de l'autre côté du plan des bras 4 et 5, par rapport au côté comportant la branche d'appui 11 du cadre en U. Pour des raisons évidentes tenant à un souci de rendre maximale la capacité de chargement du chariot, la liaison articulée 9 est prévue à proximité de l'un des bras 4 ou 5. Comme on peut le voir plus nettement sur la figure 3, la liaison articulée 9 est composée de trois éléments formant bielles, articulés bout à bout, à savoir une tige 18 de grande longueur reliée à chacune de ses extrémités à une bielette 19, 20 elle-même articulée sur une branche respective 11, 17 du cadre correspondant 7, 8.

En revenant à la figure 1, on peut voir que le châssis 2 du chariot selon l'invention est constitué d'une ossature en forme de cadre 21 reposant sur les roulettes 3 et à laquelle est suspendue une structure métallique 22 qui supporte une plate-forme 23. L'ossature 21 se compose de deux branches longitudinales 24 et 25 sur lesquelles sont respectivement articulés, intérieurement à l'ossature 21, les bras 4 et 5, et de deux branches transversales 26 et 27. La branche transversale arrière 27 comporte des étriers 28 qui, comme on le verra plus loin, servent de passage pour les bras 4 et 5 en position repliée, ces étriers 28 délimitant une protubérance 29. On observera ici que les roulettes 3 sont respectivement fixées au milieu des branches 24, 25, 26 et 27 de l'ossature 21.

Sur la figure 4 qui représente le cadre rectangulaire 8 en vue de dessus, sont détaillés les éléments de fixation 14 et 15 dont il a été fait mention plus haut. L'élément 14 est un organe de retenue en forme de C, soudé extérieurement au cadre 8, sur la branche 17 de celui-ci. Quant à l'élément 15, il est constitué par un support sensiblement en forme de demi-cercle qui prolonge le cadre 8, sur sa branche opposée 31. Ce support 15 comprend deux arceaux superposés 32 et 33 reliés par des anneaux 34 ouverts vers l'extérieur, qui délimitent une gorge dans laquelle est logé un cordon élastique 35.

De manière avantageuse, le chariot selon l'invention comprend un élément de support pour une essoreuse manuelle amovible 39 de type connu en soi. Comme cela ressort de la figure 1, cet élément de support est constitué de deux tubes parallèles 36, 37 reliés à leurs extrémités par deux plaquettes de montage. Le support d'essoreuse est soudé, par l'intermédiaire de ces deux plaquettes de montage, entre les deux bras 4, 5 de l'armature 1 et plus précisément au niveau de l'articulation du cadre en U 7. Le positionnement du support est tel que, lorsque l'armature 1 est dans sa position dépliée, les deux tubes 36, 37 s'étendent l'un au-dessus de l'autre dans un plan perpendiculaire à celui du châssis. En outre, le tube supérieur 26 est aplati dans le plan contenant les deux tubes.

Le chariot selon l'invention constitue, de par ces dispositions, un porte-essoreuse mobile et repliable particulièrement utile dans les hôpitaux. Grâce à un calcul judicieux de la longueur et de l'inclinaison de la béquille 7 et de la position des points d'articulation de celle-ci sur les bras 4 et 5, combiné au positionnement particulier des roulettes, on réalise en outre un porte-essoreuse apte à résister aux contraintes particulièrement élevées qui lui sont imposées lors de la manipulation de l'essoreuse.

Il est à noter ici que, suivant la répartition des tâches d'entretien dans un hôpital, le chariot selon l'invention peut être utilisé uniquement en tant que porte-essoreuse et, dans ce cas, il n'est pas nécessaire de l'équiper de plateaux-support.

En se référant à la figure 2, on peut voir de quelle manière le chariot selon l'invention peut être utilisé pour des tâches d'entretien et de nettoyage. Le support en arceau double 15 sert à la fixation d'un sac poubelle 38 maintenu en place grâce au cordon élastique 35. Un baquet 40 à deux compartiments pour l'eau propre et l'eau sale est installé sur la plate-forme 23 du châssis 2 juste en dessous de l'essoreuse 39. Un bac 41 est placé sur le cadre rectangulaire 8 pour recevoir divers objets tels que des flacons de produits d'entretien 42. La plate-forme 23 peut également être utilisée à cette fin, tandis que l'organe de retenue en forme de C 14 sert à retenir par leur manche des balais 43 reposant par leur brosse sur la plate-forme 23. On peut donc observer que le chariot selon l'invention possède une très grande capacité de chargement et peut recevoir toutes sortes d'objets ou accessoires hétéroclites.

La capacité de chargement du chariot selon l'invention peut encore être augmentée par l'adjonction d'autres éléments de support. C'est ainsi que l'on peut monter, entre les bras 4 et 5 de l'armature 1, au moins un autre cadre rectangulaire pivotant portant un plateau et relié aux cadres 7 et 8 par des liaisons articulées semblables à la liaison 9. La provision de plusieurs plateaux de support pivotants trouve son intérêt dans les restaurants de collectivités pour le transport des plateaux-repas.

On va maintenant décrire en référence aux figures 3, 5 et 6 le mode de repliage de ce chariot.

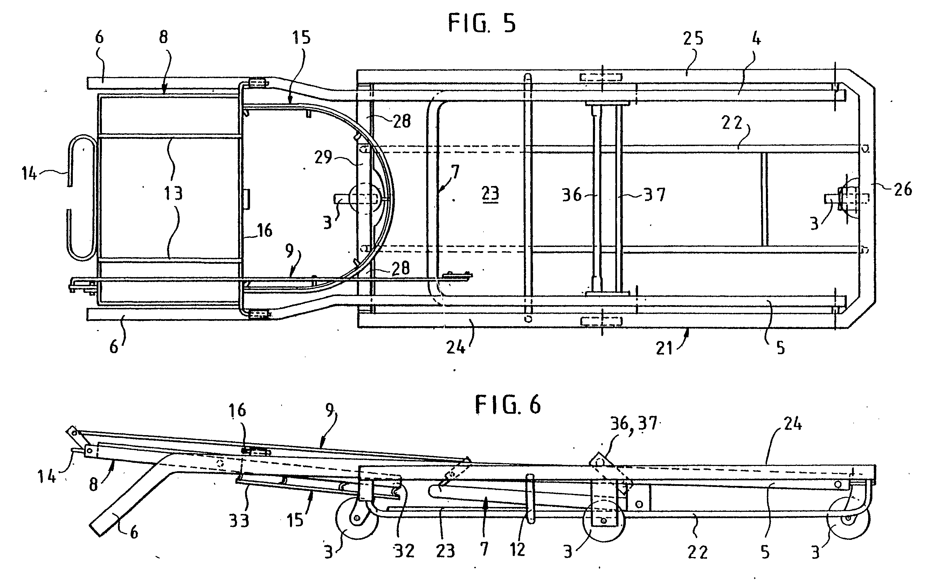

On soulève tout d'abord légèrement les bras 4 et 5 pour dégager de la butée 12 le cadre en U 7 formant la béquille. On fait ensuite pivoter le cadre rectangulaire 8 dans le sens de la flèche A de la figure 3, pour l'amener sensiblement dans le plan des bras 4 et 5. Grâce à la liaison articulée 9, le cadre en U 7 pivote en sens inverse et vient se placer dans ce même plan. Il reste ensuite à coucher l'armature 1 ainsi repliée sur le châssis 2, comme représenté sur les figures 5 et 6, les bras 4 et 5 venant s'engager dans les étriers 28 de l'ossature 21.

Lorsque l'armature 1 est dans cette position, le support en double arceau 15 du cadre rectangulaire 8 vient, comme on peut le voir sur la figure 5, s'appliquer avec frottement contre les arêtes latérales de la protubérance 29 du châssis, ce qui assure un verrouillage de l'armature 1 en position repliée sur le châssis 2 et permet de manipuler le chariot replié sans risque de voir l'armature s'ouvrir. En variante, ce moyen de verrouillage peut consister en un verrou manuel monté sur l'un des bras 4 ou 5 et coopérant avec la branche d'appui de l'étrier 28 dans lequel il vient s'engager en position repliée.

La mise en place du chariot dans sa position dépliée d'utilisation s'effectue en exécutant les différentes opérations décrites ci-dessus dans l'ordre inverse.

On peut constater en se reportant à la figure 6, que le chariot replié présente une épaisseur sensiblement égale à celle de son châssis 2, qui dans la pratique est de l'ordre de 12 cm.

Par suite, son encombrement est réduit au minimum, ce qui se traduit bien entendu par un gain de place considérable lorsque l'on range plusieurs chariots de ce type dans un même local.

Outre cet avantage, le chariot présente dans sa forme dépliée une structure très aérée qui le rend particulièrement léger et maniable.

Il est encore à noter que l'armature 1 peut comprendre plus de deux bras, chaque paire de deux bras adjacents pouvant être équipée d'éléments de support de la manière décrite ci-dessus.

**Revendications**

1. Chariot multi-fonctions utilisé notamment pour l'exécution des tâches de nettoyage et d'entretien dans un hôpital, du type comprenant des roulettes (3) sur lesquelles sont montées une partie rigide (2) et une armature repliable (1) pouvant être placée dans une position dépliée d'utilisation ou une position repliée de repos, caractérisé en ce que la partie rigide est constituée par un châssis (2) reposant à plat sur les roulettes (3), et en ce que l'armature (1) comprend au moins deux bras (4, 5) articulés sur le châssis, un cadre en forme de U (7) étant monté pivotant entre ces deux bras de manière à constituer une béquille destinée à venir s'appuyer contre une butée (12) solidaire du châssis (2) pour immobiliser l'armature (1) en position dépliée, les deux bras (4, 5) pouvant éventuellement porter entre eux un ou plusieurs éléments de support pour des objets ou des ustensiles à transporter.

2. Chariot multi-fonctions selon la revendication 1, caractérisé en ce que les bras (4, 5) de l'armature (1) sont sensiblement parallèles et se terminent à leurs extrémités libres par des poignées recourbées (6).

3. Chariot multi-fonctions selon la revendication 1 ou 2, caractérisé en ce que l'armature (1) est articulée sur la partie frontale du châssis et comprend un élément de support pour une essoreuse manuelle amovible (39), constitué de deux tubes parallèles (36, 37) reliés à leurs extrémités par deux plaquettes de montage, cet élément de support étant fixé entre les deux bras (4, 5) au niveau de l'articulation du cadre en U (7), en étant positionné de telle manière que les deux tubes (36, 37) s'étendent l'un au-dessus de l'autre dans un plan perpendiculaire à celui du châssis (2) lorsque l'armature est dans sa position dépliée, le tube supérieur (36) étant en outre aplati dans ledit plan contenant les deux tubes.

4. Chariot multi-fonctions selon l'une quelconque des revendications 1 à 3, caractérisé en ce que l'armature (1) comprend en tant qu'élément de support, un ou plusieurs cadres rectangulaires (8) portant chacun un plateau de support et montés à pivotement entre les deux bras (4, 5), ce ou ces cadre(s) rectangulaire(s) et le cadre en U (7) étant reliés en succession par des liaisons articulées (9).

5. Chariot multi-fonctions selon la revendication 4, caractérisé en ce que l'armature comprend un seul cadre rectangulaire (8) et en ce que la liaison articulée (9) est constituée d'au moins trois éléments (18, 19, 20) formant bielles articulés bout à bout, et est montée entre la branche d'appui (11) du cadre en U (7) et celle des branches (17) du cadre rectangulaire (8) qui est parallèle à l'axe d'articulation de celui-ci et est située de l'autre côté du plan des bras (4, 5), par rapport au côté comportant la branche d'appui (11) du cadre en U (7).

6. Chariot multi-fonctions selon la revendication 5, caractérisé en ce qu'une tringle de support (16) est fixée entre les deux bras (4, 5) pour servir d'appui au cadre rectangulaire (8) lorsque l'armature est dans sa position dépliée.

7. Chariot multi-fonctions selon la revendication 5 ou 6, caractérisé en ce que le cadre rectangulaire (8) est prolongé, sur sa branche (31) opposée à celle qui est reliée à la liaison articulée, par un support (15) sensiblement en forme de demi-cercle qui comporte sur sa périphérie des éléments de fixation (32, 33, 34, 35) pour un sac souple tel qu'un sac poubelle.

8. Chariot multi-fonctions selon la revendication 7, caractérisé en ce que le support (15) comprend deux arceaux superposés (32, 33) reliés par des anneaux (34) ouverts vers l'extérieur qui délimitent une gorge dans laquelle est logé un cordon élastique (35).

9. Chariot multi-fonctions selon l'une quelconque des revendications 3 à 6, caractérisé en ce que le cadre rectangulaire (8) porte, sur sa branche (17) reliée à la liaison articulée (9), un organe de retenue en forme de C (14).

10. Chariot multi-fonctions selon l'une quelconque des revendications 1 à 9, caractérisé en ce que le châssis (2) comprend une plate-forme (23) suspendue à une ossature en forme de cadre (21) portant les roulettes (3), cette ossature étant constituée de deux branches longitudinales (24, 25) sur lesquelles les bras (4, 5) s'articulent intérieurement à l'ossature et de deux branches transversales (26, 27) dont une comporte des étriers (28) pour recevoir les bras dans leur position repliée.

11. Chariot multi-fonctions selon l'une quelconque des revendications 1 à 10, caractérisé en ce qu'il comprend des moyens de verrouillage (29) pour immobiliser l'armature (1) en position repliée par rapport au châssis (2).

**Claims**

1. A general purpose hand-cart particularly for use in performing cleaning and maintenance tasks in a hospital, of the type comprising castors (3) on which are mounted a rigid part (2) and a foldable framework (1) which may be placed in an opened out position for use or a folded up position when not in use, characterized in that the rigid part is formed by a chassis (2) horizontally resting on the castors (3) and in that the framework (1) comprises at least two arms (4, 5), hinged to the chassis, a U shaped frame (7) being pivotally mounted between these two arms so as to form a prop adapted to abut against a stop (12) integral with the chassis (2) for securing the framework (1) in the opened out position, the two arms (4, 5) having if required extending therebetween one or more support members for objects or ustensile to be transported.

2. The general purpose hand-cart according to claim 1, characterized in that the arms (4, 5) of the framework (1) are substantially parallel and end at their free ends in curved handles (6).

3. The general purpose hand-cart according to claim 1 or 2, characterized in that the framework (1) is hinged to the front part of the chassis and comprises a support member for a removable manually operated winging device (39) formed from two parallel tubes (36, 37) connected together at their ends by two mounting plates, this support member being fixed between the two arms (4, 5) at the level of the hinge of the U shaped frame (7) while being positioned so that the two tubes (36, 37) extend one above the other in a plane perpendicular to that of the chassis (2) when the framework is in its opened out position, the upper tube (36) being further flattened in said plane containing the two tubes.

4. The general purpose hand-cart according to any one of claims 1 to 3, characterized in that the framework (1) comprises, as support member, one or more rectangular frames (8) each carrying a support tray and pivotally mounted between the two arms (4, 5), this or these rectangular frame or frames and the U shaped frame (7) being connected together in succession by an articulated linkage (9).

5. The general purpose hand-cart according to claim 4, characterized in that the framework comprises a single rectangular frame (8) and in that the articulated linkage (9) is formed by at least three link members (18, 19, 20) articulated end-to-end and is mounted between the support branch (11) of the U shaped frame (7) and that one of the branches (17) of the rectangular frame (8) which is parallel to the pivot axis thereof and is situated on the other side of the plane of the arms (4, 5), with respect to the side comprising the support branch (11) of the U shaped frame (7).

6. The general purpose hand-cart according to claim 5, characterized in that a support rod (16) is fixed between the two arms (4, 5) so as to serve as support for the rectangular frame (8) when the framework is in its opened out position.

7. The general purpose hand-cart according to claim 5 or 6, characterized in that the rectangular frame (8) extends, on its branch (31) opposite to the one which is connected to the articulated linkage into a substantially semi-circularly shaped support (15) which comprises on its periphery attachment members (32, 33, 34, 35) for a collapsible bag such as a garbage bag.

8. The general purpose hand-cart according to claim 7, characterized in that the support (15) comprises two superimposed arcuate members (32, 33) connected together by outwardly opened rings (34) which define a groove within which a resilient string (35) is accomodated.

9. The general purpose hand-cart according to any one of claims 3 to 6, characterized in that the rectangular frame (8) has, on its branch (17) connected to the articulated linkage (9), a C shaped retainer (14).

10. The general purpose hand-cart according to any one of claims 1 to 9, characterized in that the chassis (2) comprises a platform (23) hanging on to a frame-shaped carcass (21) which carries the castors (3), this carcass being formed from two longitudinal branches (24, 25), on which the arms (4, 5) are pivoted inwardly of the carcass and from two transverse branches (26, 27) one of which comprises cradle stirrups (28) for receiving the arms in their folded up position.

11. The general purpose hand-cart according to any one of claims 1 to 10, characterized in that it comprises locking means (29) for securing the framework (1) in the folded up position with respect to the chassis (2).

## Patentansprüche

1. Mehrzweckwagen, insbesondere zur Ausführung von Reinigungs- und Pflegeaufgaben in einem Krankenhaus verwendet, des Typs mit Rollen (3), auf denen ein starres Teil (2) und eine zusammenlegbare Armatur (1) befestigt sind, die in eine auseinander-gefaltete Gebrauchsposition oder eine zusammengefaltete Ruheposition gebracht werden kann, dadurch gekennzeichnet, daß das starre Teil aus einem Chassis (2) besteht, das eben über den Rollen (3) ruht, und daß die Armatur (1) wenigstens zwei an dem Chassis angelenkte Arme (4, 5), einem Rahmen in U-Form (7) umfaßt, schwenkbar zwischen den beiden Armen so montiert, daß eine Stütze gebildet wird, dazu bestimmt, sich auf einen mit dem Chassis (2) fest verbundenen Anschlag (12) zu stützen, um die Armatur (1) in entfalteter Stellung unbeweglich zu machen, wobei die beiden Arme (4, 5) gegebenenfalls zwischen sich ein oder mehrere tragende Elemente für zu transportierende Gegenstände oder Geräte tragen können.

2. Mehrzweckwagen nach Anspruch 1, dadurch gekennzeichnet, daß die Arme (4, 5) der Armatur (1) im wesentlichen parallel sind und an ihren freien Enden in abgebogenen Handgriffen (6) enden.

3. Mehrzweckwagen nach Anspruch 1 oder 2, dadurch gekennzeichnet, daß die Armatur (1) am Vorderteil des Chassis angelenkt ist und ein Trägerelement für eine manuelle, entfernbare Wringmaschine (39) aufweist, bestehend aus zwei parallelen Rohren (36, 37), die an ihren Enden durch zwei Montageplättchen verbunden sind, wobei dieses Trägerelement zwischen den beiden Armen (4, 5) in Höhe der Anlenkung des U-Rahmens (7) befestigt ist, wobei es so angeordnet ist, daß die beiden Rohre (36, 37) sich übereinander in einer Ebene senkrecht zu der des Chassis (2) erstrecken, wenn die Armatur in entfalteter Stellung ist, wobei das obere Rohr (36) außerdem in der die beiden Rohre enthaltenden Ebene abgeflacht ist.

4. Mehrzweckwagen nach irgend einem der Ansprüche 1 bis 3, dadurch gekennzeichnet, daß die Armatur (1) als Trägerelement ein oder mehrere rechtwinklige Rahmen (8) umfaßt, die jeweils eine Trägerplattform tragen, schwenkbar montiert zwischen den beiden Armen (4, 5), wobei der oder die rechtwinklige(n) Rahmen und der U-Rahmen (7) durch angelenkte Verbindungen (9) lückenlos verbunden sind.

5. Mehrzweckwagen nach Anspruch 4, dadurch gekennzeichnet, daß die Armatur einen einzigen rechtwinkligen Rahmen (8) aufweist und daß die angelenkte Verbindung (9) aus wenigstens drei Elementen (18, 19, 20) besteht, die Ende-an-Ende- angelenkte Pleuelstangen bilden, und zwischen dem Stützarm (11) des U-Rahmens (7) und dem der Arme (17) des rechtwinkligen Rahmens (8) montiert ist, der parallel zu seiner Anlenkachse ist und auf der anderen Seite der Ebene der Arme (4, 5) gelegen ist, bezogen auf die Seite, die den Stützarm (11) des U-Rahmens (7) aufweist.

6. Mehrzweckwagen nach Anspruch 5, dadurch gekennzeichnet, daß eine kleine Trägerstange (16) zwischen den beiden Armen (4, 5) als Stütze für den rechtwinkligen Rahmen (8), wenn die Armatur in entfalteter Stellung ist, fixiert ist.

7. Mehrzweckagen nach Anspruch 5 oder 6, dadurch gekennzeichnet, daß der rechtwinklige Rahmen (8) an seinem Arm (31) gegenüber dem, der mit der angelenkten Verbindung verbunden ist, durch einen im wesentlichen halbkreisförmigen Träger (15) verlängert ist, der auf seinem Umfang Befestigungselemente (32, 33, 34, 35) für einen weichen Sack, wie einen Müllsack, aufweist.

8. Mehrzweckwagen nach Anspruch 7, dadurch gekennzeichnet, daß der Träger (15) zwei übereinander liegende Bögen (32, 33) aufweist, durch nach außen offene Ringe (34) verbunden, die eine Auskehlung festlegen, in der ein elastischer Streifen (35) liegt.

9. Mehrzweckwagen nach irgend einem der Ansprüche 3 bis 6, dadurch gekennzeichnet, daß der rechtwinklige Rahmen (8) auf seinem mit der angelenkten Verbindung (9) verbundenen Arm (17) ein Halteorgan in C-Form (14) trägt.

10. Mehrzweckwagen nach irgend einem der Ansprüche 1 bis 9, dadurch gekennzeichnet, daß das Chassis (2) eine an einem Gerüst in Rahmenform (21), die Rollen (3) tragend, aufgehängte Plattform (23) umfaßt, wobei dieses Gerüst aus zwei Längsarmen (24, 25) besteht, auf denen die Arme (4, 5) innenseitig an dem Gerüst angelenkt sind, und zwei Querarme (26, 27), deren einer Bügel (28) zur Aufnahme der Arme in zusammengefalteter Stellung aufweist.

11. Mehrzweckwagen nach irgend einem der Ansprüche 1 bis 10, dadurch gekennzeichnet, daß er Verriegelungseinrichtungen (29) zum Umbeweglichmachen der Armatur (1) in zusammengefalteter Stellung relativ zum Chassis (2) aufweist.

FIG.1

FIG. 2

0 062 566

FIG. 4

FIG. 3

# FIG. 5

# FIG. 6

0 062 566